# EUROPÄISCHE PATENTSCHRIFT

(11) **EP 0 816 152 B1**
(45) Veröffentlichungstag und Bekanntmachung des Hinweises auf die Patenterteilung: **01.12.1999**
(21) Anmeldenummer: 97108736.6
(22) Anmeldetag: 31.05.1997
(51) Int. Cl.: B60K 15/077, F02M 37/00

(54) **Kraftstoff-Entnahmevorrichtung**
Fuel withdrawing device
Dispositif pour enlever du combustible

(30) Priorität: 04.07.1996 DE 19626902
(43) Veröffentlichungstag der Anmeldung: 07.01.1998
(73) Patentinhaber: DaimlerChrysler AG, 70567 Stuttgart (DE)
(72) Erfinder: Richter, Christian, 73207 Plochingen (DE); Siebels, Karl-Heinz, 70327 Stuttgart (DE)

(56) Entgegenhaltungen:
- EP-A- 0 340 063
- EP-A- 0 533 541
- EP-A- 0 652 127
- DE-A- 2 458 982
- DE-A- 4 320 375
- DE-U- 9 101 313
- GB-A- 2 174 651

## Beschreibung

Die Erfindung bezieht sich auf eine Kraftstoff-Entnahmevorrichtung mit einem in einem Kraftstofftank anzuordnenden Schlingertopf gemäß dem Oberbegriff des Hauptanspruchs 1.

Aus der EP 0 340 063 A1 ist eine gattungsgemäße Kraftstoff-Entnahmevorrichtung zur Entnahme von Kraftstoff aus einem Kraftstofftank bekannt. Die Entnahmevorrichtung umfaßt einen in dem Kraftstofftank anzuordnenden Schlingertopf, in welchen eine Kraftstoff-Rücklaufleitung und eine Kraftstoff-Ansaugleitung münden, wobei der untere Teil der Kraftstoff-Ansaugleitung innerhalb eines Filters angeordnet ist. Der Schlingertopf weist zwei einstückig angeformte, in Richtung einer Hochachse verlaufende Aufnahmen für den Filter und die Kraftstoff-Rücklaufleitung auf.

Zum allgemeinen technischen Hintergrund wird noch auf die DE 91 01 313 U1, EP 0 300 910 B1, DE 42 36 490 C1, DE 43 20 375 A1 und DE 34 08 520 A1 verwiesen.

Es ist die Aufgabe der Erfindung, eine Kraftstoff-Entnahmevorrichtung derart auszubilden, daß bei einer kostengünstigen und einfachen Herstellung der Entnahmevorrichtung, eine gute Durchmischung des rücklaufenden Kraftstoffs gewährleistet ist.

Diese Aufgabe wird erfindungsgemäß durch die im Patentanspruch 1 gegebenen Merkmale gelöst.

In Ausgestaltung der Erfindung ist nach Anspruch 1 ein Auslaßschlitz an der Aufnahme für die Kraftstoff-Rücklaufleitung vorgesehen, der den vom Motor kommenden, in den Kraftstofftank rücklaufenden Kraftstoff zur Schlingertopfwand hin lenkt. Der Schlingertopf dient als Beruhigungsvolumen innerhalb des Kraftstofftanks und gleichzeitig als Sammelvolumen für den im Motor erwärmten Rücklaufkraftstoff. Der Schlingertopf verhindert ein unkontrolliertes Wegschwemmen des erwärmten Rücklauf-Kraftstoffs im Fahrbetrieb und begrenzt die zu erwärmende Kraftstoffmenge des im Tank befindlichen kalten Kraftstoffs. Der durch den Auslaßschlitz in den Schlingertopf austretende, warme Rücklaufkraftstoff wird an der Schlingertopfwand bogenförmig zur Kraftstoff-Ansaugleitung hin umgelenkt, wodurch sich eine geordnete Strömung des rücklaufenden Kraftstoffs im Schlingertopf ergibt. Der rücklaufende Kraftstoff legt dadurch bis zur Ansaugleitung einen größtmöglichen Weg im Schlingertopf zurück, auf dem sich die im Rücklaufkraftstoff eventuell befindlichen Gasblasen im Kraftstofftank abscheiden können. Eine externe Entlüftung kann somit entfallen. Ferner sorgt die geordnete Strömung für eine gute Durchmischung des warmen Rücklaufkraftstoffs mit dem kalten Tankkraftstoff, in etwa im Verhältnis 1:1, und damit für eine gute Vorwärmung des dem Motor über die Ansaugleitung zugeführten Tankkraftstoffs insbesondere im Winterbetrieb der Brennkraftmaschine. Eine separate Kraftstoffvorwärmung kann somit ebenfalls entfallen. Besteht im Winterbetrieb die Gefahr einer Filterverstopfung durch Paraffinausscheidungen des Kraftstoffs, so wirkt die Durchströmung des Filters mit dem warmen Rücklaufkraftstoff einem Zusetzen des Filters entgegen.

Ein weiterer Vorteil der erfindungsgemäßen Kraftstoff-Entnahmevorrichtung liegt in der einfachen Herstellung der Kraftstoff-Entnahmevorrichtung und der damit verbundenen einfachen Montage der Bauteile insbesondere des Filters. Durch die Integration der Aufnahmen für den Filter und für die KraftstoffRücklaufleitung in den Schlingertopf entfallen zwei zusätzliche Bauteile, was zu einer Kostensenkung führt.

In einer besonders vorteilhaften baulichen Ausgestaltung der Erfindung gemäß Anspruch 2 bildet die Aufnahme für den Filter einen Clip, in den der Filter schnell und problemlos einclipsbar ist, wodurch eine Montageerleichterung ermöglicht ist.

Bevorzugt weist der Schlingertopf gemäß Anspruch 3 mindestens eine Rippe auf, so daß die Öffnung der Kraftstoff-Ansaugleitung bei der Montage nicht verschlossen werden kann, da die Rippe im Falle einer fehlerhaften Montage als Anschlag für die Kraftstoff-Ansaugleitung dient und ein Anstoßen der Leitung auf dem Boden des Schlingertopfes und somit ein Verschließen der Leitung verhindert. Selbst im Falle eines Anstoßens der Ansaugleitung an der Rippe kann durch die Ansaugleitung noch genügend Kraftstoff auch für den Vollastbetrieb angesaugt werden.

Durch die Ausgestaltung der Erfindung nach Anspruch 4 wird erreicht, daß im Falle eines Absinkens des Kraftstoffniveaus unter den Rand des Schlingertopfes die Kraftstoffzufuhr auch bei Kurvenfahrt, insbesondere auch im Vollastbereich der Brennkraftmaschine, über die Zulaufbohrungen sichergestellt ist.

Weitere Ausgestaltungen und Vorteile der Erfindung gehen aus der Beschreibung hervor.

Ein Ausführungsbeispiel der Erfindung ist im folgenden in drei Zeichnungen mit weiteren Einzelheiten näher erläutert, und zwar zeigen:
- Fig. 1: einen Schnitt durch eine erfindungsgemäße KraftstoffEntnahmevorrichtung mit einem Schlingertopf gemäß der Linie I-I aus Fig. 3, wobei der Schlingertopf zwei Aufnahmen aufweist, in die ein Filter mit einer Kraftstoff-Ansaugleitung und eine Kraftstoff-Rücklaufleitung angeordnet sind,
- Fig. 2: einen Schnitt durch die Kraftstoff-Entnahmevorrichtung aus Fig. 1 gemäß der Linie II-II aus Fig. 3, wobei die einstückig an den Schlingertopf angeformte Aufnahme für den Filter als Clip ausgebildet ist und
- Fig. 3: einen Schnitt durch den Schlingertopf mit in die Aufnahme eingeclipstem Filter gemäß der Linie III-III aus Fig. 1 sowie dem durch Pfeile angedeuteten Verlauf der Strömung des rücklaufenden Kraftstoffs und strichliert angedeuteten Zulaufbohrungen.

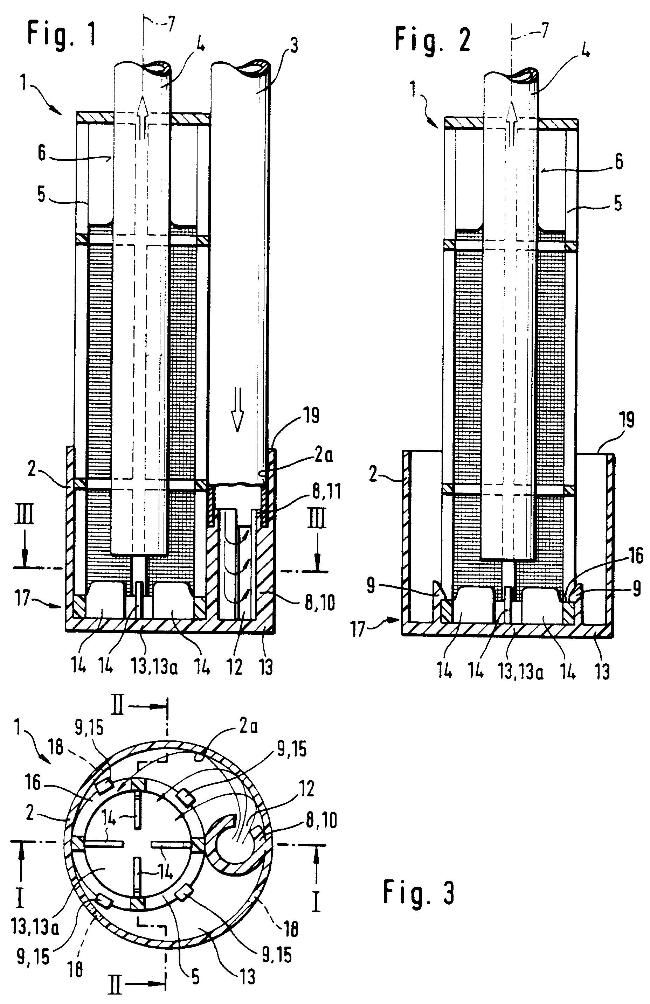

In den Fig. 1 bis 3 ist eine Kraftstoff-Entnahmevorrichtung 1 dargestellt, die einen in einem nicht dargestellten Kraftstofftank angeordneten Schlingertopf 2 umfaßt, in welchen eine Kraftstoff-Rücklaufleitung 3 und eine Kraftstoff-Ansaugleitung 4 mit einem Filter 5 münden. Die Kraftstoff-Entnahmevorrichtung 1 ist Bestandteil einer in den Kraftstofftank einschraubbaren Einsatzvorrichtung, die auch den Geber enthält.

Wie in Fig. 1 und 2 gezeigt, ist der untere Teil der Kraftstoff-Ansaugleitung 4 innerhalb des zylinderförmigen Filters 5 angeordnet. Der Filter 5 weist in einem oberen Bereich eine Passung 6 auf, in die die Kraftstoff-Ansaugleitung 4 fest eingepreßt ist.

Der Schlingertopf 2 weist erfindungsgemäß zwei einstückig angeformte, in Richtung einer Hochachse 7 verlaufende Aufnahmen 8, 9 für die Kraftstoff-Rücklaufleitung 3 und den Filter 5 auf. Die Aufnahme 8 für die Kraftstoff-Rücklaufleitung 3 umfaßt einen Rohrstutzen 10, an dessen oberem Bereich ein Führungsabsatz 11 angeordnet ist, auf den die Kraftstoff-Rücklaufleitung 3 aufgesteckt wird. Der Rohrstutzen 10 weist einen in Richtung der Hochachse 7 verlaufenden Auslaßschlitz 12 auf, der dem rücklaufenden Kraftstoff eine bogenförmige Strömung (in Fig. 1 und 3 mit Strömungspfeilen dargestellt) aufzwingt, die zunächst in Richtung zu einer Schlingertopfwand 2a und anschließend zur Kraftstoff-Ansaugleitung 4 hin verläuft.

Der Schlingertopf 2 weist an einem Boden 13 im Bereich 13a der Aufnahme 9 für den Filter 5 Rippen 14 auf, an die die in den Filter 5 eingesteckte Kraftstoff-Ansaugleitung 4 bei fehlerhafter Montage anschlagbar ist.

Wie in Fig. 2 dargestellt, besteht die Aufnahme 9 für den Filter 5 aus an dem Boden 13 des Schlingertopfes 2 angeformten Nasen 15, die in eine um den Umfang des Filters 5 verlaufende, ringförmige Nasenaufnahme 16 des Filters 5 einrasten. Es sind auch andere Ausgestaltungen der Clipverbindung denkbar.

Gemäß Fig. 3 sind in einem unteren Bereich 17 (siehe Fig. 1 und 2) des Schlingertopfes 2 strichliert dargestellte Zulaufbohrungen 18 angeordnet, die gewährleisten, daß auch dann noch ausreichend Tankkraftstoff angesaugt werden kann, wenn das Kraftstoffniveau unter einen Rand 19 (siehe Fig. 1 und 2) des Schlingertopfes 2 sinkt.

## Patentansprüche

1. Kraftstoff-Entnahmevorrichtung mit einem in einem Kraftstofftank anzuordnenden Schlingertopf (2), in welchen eine Kraftstoff-Rücklaufleitung (3) und eine Kraftstoff-Ansaugleitung (4) münden, deren unterer Teil innerhalb eines Filters (5) angeordnet ist, wobei der Schlingertopf zwei einstückig angeformte, in Richtung einer Hochachse verlaufende Aufnahmen (9,8) für den Filter und die Kraftstoff-Rücklaufleitung aufweist,
**dadurch gekennzeichnet,**
**daß** die Aufnahme (8) für die Kraftstoff-Rücklaufleitung (3) einen Rohrstutzen (10) mit einem in Richtung der Hochachse (7) verlaufenden Auslaßschlitz (12) umfaßt, der den rücklaufenden Kraftstoff in Richtung zur Schlingertopfwand (2a) lenkt.

2. Kraftstoff -Entnahmevorrichtung nach Anspruch 1,
**dadurch gekennzeichnet,**
**daß** die Aufnahme (9) für den Filter (5) aus mindestens einem Clip gebildet ist, in den der Filter (5) einclipsbar ist.

3. Kraftstoff-Entnahmevorrichtung nach Anspruch 1 oder 2,
**dadurch gekennzeichnet,**
**daß** der Schlingertopf (2) mindestens eine Rippe (14) aufweist, an die die Kraftstoff-Ansaugleitung (4) anschlagbar ist.

4. Kraftstoff-Entnahmevorrichtung nach einem der Ansprüche 1 bis 3,
**dadurch gekennzeichnet,**
**daß** der Schlingertopf (2) in einem unteren Bereich (17) Zulaufbohrungen (18) aufweist.

## Claims

1. Fuel extraction device with a twist casing (2), into which a fuel return pipe (3) and a fuel suction tube (4) open, to be disposed in a fuel tank, the lower section of the said twist casing being disposed inside a filter (5), whereby the twist casing has two single-piece uptake means formed on it, which run in the direction of the vertical planar axis, these uptake means being for the filter and the fuel return pipe,
characterized in that
the uptake means (8), for the fuel return pipe (3, comprises a bush (10) with an outlet slot, running in the direction of the vertical planar axis, which directs the returning fuel towards the wall (2a) of the twist casing.

2. Fuel extraction device in accordance with claim 1,
characterized in that
the uptake means (9) for the filter (5), is formed by at least one clip into which the filter (5) can be clipped.

3. Fuel extraction device in accordance with claims 1 or 2, characterized in that
the twist casing (2) has at least one rib (14) against which
the fuel suction tube (4) can come to lie.

4. Fuel extraction device in accordance with claims 1 to 3, characterized in that
the twist casing (2) has, in a lower area (1), inlet holes
(18).

## Revendications

1. Dispositif de prélèvement de carburant comportant un pot de stabilisation (2), qui doit être disposé dans un réservoir de carburant et dans lequel débouchent une canalisation (3) de retour du carburant et une canalisation (4) d'aspiration du carburant, dont la partie inférieure est disposée à l'intérieur d'un filtre (5), le pot de stabilisation possédant deux logements (9, 8) formés d'un seul tenant, qui s'étendent dans la direction d'un axe vertical, pour le filtre et la canalisation de retour du carburant, caractérisé en ce
que le logement (8) pour la canalisation (3) de retour du carburant comprend une tubulure (10) comportant une fente de sortie (12) qui s'étend en direction de l'axe vertical (7) et qui fait dévier le carburant, qui revient, en direction de la paroi (2a) du pot de stabilisation.

2. Dispositif de prélèvement de carburant selon la revendication 1, caractérisé en ce
que le logement (8) pour le filtre (5) est formé par au moins une pince, dans laquelle le filtre (5) peut être encliqueté.

3. Dispositif de prélèvement de carburant selon la revendication 1 ou 2, caractérisé en ce
que le pot de stabilisation (2) comporte au moins une nervure (14), contre laquelle la canalisation (4) d'aspiration du carburant peut venir en butée.

4. Dispositif de prélèvement de carburant selon l'une des revendications 1 à 3, caractérisé en ce
que le pot de stabilisation (2) possède des perçages d'arrivée (18) dans une partie inférieure (17).
